# EUROPEAN PATENT APPLICATION

(11) **EP 0 787 894 A1**
(43) Date of publication of application: **06.08.1997**
(21) Application number: 97830019.2
(22) Date of filing: 28.01.1997
(51) Int. Cl.: F01P 5/14

(54) **Device for indicating a decrease in the flow of coolant within an engine**

(30) Priority: 30.01.1996 IT LI960001 U
(71) Applicant: Belgarda S.p.A., Gerno di Lesmo (Milano) (IT)
(72) Inventor: Giannarelli, Maurizio, Piombino ( Livorno ) (IT); Marchetti, Giampiero, Suvereto ( Livorno ) (IT)
(74) Representative: Adorno, Silvano

(57) **Abstract**

A device suitable to detect and indicate a decrease in the flow of coolant which circulates within an engine consists of a body (1) wherein a vertical cavity (2) is formed, whose bottom is in communication with the cooling circuit through an inflow duct (3) and an outflow duct (4), a float (5) being free to move in the cavity (2). The decrease in the flow of coolant incoming through the duct (3) causes an immediate lowering of the float (5) and therefore the activation of a sensor (10) which promptly indicates the problem by turning on an optical and/or acoustical signal. Preferably, the float (5) is provided at its lower end with a permanent magnet (9), and the sensor (10) is a magnetic reed switch placed in the body (1) beneath the cavity (2).

## Description

The present invention relates to monitoring devices for engines, and in particular to a device suitable to detect and indicate a decrease in the flow of coolant which circulates within an engine.

It is known that any kind of engine is provided with a thermostat which detects the operating temperature of the engine so as to indicate, by switching on a warning light, a possible overheating. In liquid-cooled engines this event may occur due to a loss of coolant and/or to a clogging of the cooling circuit with stopping of the flow of liquid. Clearly, the increase of temperature within the engine can cause damages to some members of the engine, whereby the indication of the problem must be timely.

The drawback of prior art indicating devices based on temperature detection is that they do not measure the lack of functionality of the cooling apparatus, but rather the harmful consequences deriving from said lack. Consequently, the indication provided is intrinsically belated since it concerns an harmful effect (temperature increase) which has already occurred.

Therefore the object of the present invention is to provide an indicating device suitable to overcome the above-mentioned drawback.

This object is achieved by means of a device having the characteristics disclosed in claim 1.

The fundamental advantage of the present device is to allow an immediate and timely indication of the decrease in the flow of coolant before this causes an engine overheating.

A further advantage of the present device is that it is structurally very simple, as well as small-sized. Consequently, the device is cheap, reliable and easily applicable to any kind of engine.

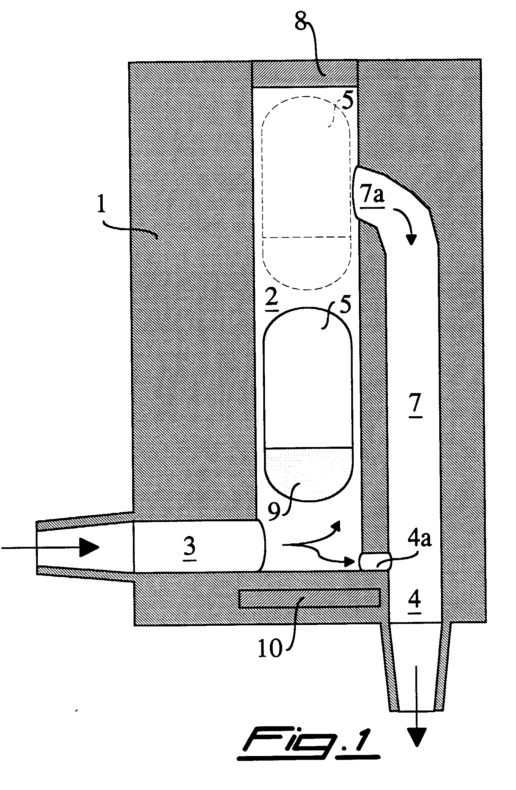

These and other advantages and characteristics of the device according to the present invention will be clear to those skilled in the art from the following detailed description of an embodiment thereof with reference to the only drawing, annexed as fig. 1, wherein a vertical cross-section of said device is schematically illustrated.

With reference to said figure, there is seen that the present device essentially consists of a body 1 wherein a vertical cavity 2 is formed, the bottom thereof being in communication with the cooling circuit through an inflow duct 3 and an outflow duct 4, a float 5 being free to move in said cavity 2.

The height of float 5 within cavity 2 is obviously defined by the level of the coolant which flows through the device, entering from duct 3 and leaving through duct 4. In particular, the cross-sectional area of the inflow duct 3 opening at the bottom of cavity 2 is larger than the cross-sectional area with which the outflow duct 4 branches out therefrom, i.e. there is a narrowing 4a. Therefore, the level of coolant within cavity 2 rises until it reaches a discharge opening 7a located about at 2/3 of the height of cavity 2 and connected to the outflow duct 4 trough a relevant duct 7.

In this way, during the normal engine operation float 5 is located about at opening 7a, as shown in dotted line. The discharge of float 5 from cavity 2 is prevented by the presence of a plug 8 which closes the top of said cavity 2, yet allowing an inspection thereof when required.

The working of the present device is very simple, in that the decrease in the flow of coolant incoming through duct 3 causes an immediate lowering of float 5 and therefore the activation of a sensor which promptly indicates the problem by turning on an optical and/or acoustical signal. The activation of the sensor upon lowering of float 5 may be achieved in several different ways, already employed in the field of float-controlled level sensors. The embodiment depicted in fig.1 shows the way which the applicant considers most easy and effective.

Float 5 is provided at its lower end with a permanent magnet 9 which is capable of activating a magnetic reed switch (so-called "reed") placed in body 1 beneath cavity 2. By properly combining the power of magnet 9 and the sensibility of switch 10, it is possible to set at will the height of float 5 below which switch 10 is triggered.

It is clear that the above-described and illustrated embodiment of the device according to the invention is just an example susceptible of various modifications. In particular, the precise shape, position and size of body 1, cavity 2 and ducts 3, 4 and 7 can be adapted according to specific requirements. Furthermore, as mentioned above, float 5 can trigger the optical/acoustical indication of the problem through other triggering mechanisms. For example, instead of employing a "free" float there could be a float slidably inserted on a rod extending from plug 8, or it could be connected to the sensor by a spring, a rocking arm or the like. All these technical solutions and the others equivalent thereto are within the scope of protection as defined by the appended claims.

## Claims

1. A device suitable to detect and indicate a decrease in the flow of coolant which circulates within an engine, including an optical and/or acoustical indicator operatively connected to a sensor (10), characterized in that it also includes a body (1) wherein a vertical cavity (2) is formed in which a float (5) moves, and in that the bottom of said cavity (2) is in communication with the cooling circuit of the engine through an inflow duct (3) and an outflow duct (4) which branches out from the cavity (2) with a cross-sectional area smaller than the opening cross-sectional area of said inflow duct (3), a discharge opening (7a) being formed on a side of the cavity (2) and connected to said outflow duct (4) through a relevant duct (7), said float (5) being connected to said sensor (10) so as to activate it upon lowering of the float (5) below a set height.

2. A device according to claim 1, characterized in that the float (5) is provided at its lower end with a permanent magnet (9), and in that the sensor (10) is a magnetic reed switch placed in the body (1) beneath the cavity (2).

3. A device according to claim 1 or 2, characterized in that the cavity (2) is closed at the top by a removable plug (8).
